# EUROPÄISCHE PATENTSCHRIFT

(11) **EP 3 626 870 B1**
(45) Veröffentlichungstag und Bekanntmachung des Hinweises auf die Patenterteilung: **15.05.2024**
(21) Anmeldenummer: 19198177.8
(22) Anmeldetag: 19.09.2019
(51) Int. Cl.: D01H 4/10, C04B 37/02, F16D 1/08

(54) **SPINNROTOR MIT EINEM HALTER ZUM ROTIEREN EINER ROTORTASSE UND VERFAHREN ZUR HERSTELLUNG EINER PRESSVERBINDUNG ZWISCHEN EINER ROTORTASSE UND EINEM HALTER**
SPINNING ROTOR WITH A HOLDER AND A ROTOR SOCKET AND METHOD FOR PRODUCING A PRESS-FIT CONNECTION BETWEEN A ROTOR SOCKET AND A HOLDER
ROTOR DE FILATURE COMPRENANT UN SUPPORT ET UNE TASSE ET PROCÉDÉ DE FABRICATION D'UNE FIXATION PAR AJUSTEMENT SERRÉ D'UNE TASSE DE ROTOR ET D'UN SUPPORT

(30) Priorität: 20.09.2018 DE 102018007453
(43) Veröffentlichungstag der Anmeldung: 25.03.2020
(73) Patentinhaber: Saurer Spinning Solutions GmbH & Co. KG, 52531 Übach-Palenberg (DE)
(72) Erfinder: Winzen, Lothar, 52134 Herzogenrath (DE)
(74) Vertreter: Schniedermeyer, Markus

(56) Entgegenhaltungen:
- DE-A1- 2 939 326
- DE-A1- 19 639 945
- DE-A1- 19 848 118
- DE-A1-102008 000 201
- JP-A- S58 176 499

## Beschreibung

Die vorliegende Erfindung betrifft einen Spinnrotor umfassend eine Rotortasse aus Keramik und einen wellenartigen Halter aus Metall zum Rotieren der Rotortasse mit einer zylindrischen Vertiefung, die einen Innenzylinder bildet, wobei die Rotortasse einen zylindrischen Ansatz aufweist, der einen Außenzylinder bildet und wobei der Innenzylinder des Halters und der Außenzylinder der Rotortasse mittels einer Pressverbindung unlösbar verbunden sind. Die Erfindung betrifft auch ein Verfahren zur Herstellung einer Pressverbindung zwischen der Rotortasse aus Keramik und einem wellenartigen Halter aus Metall, wobei der Innenzylinder des Halters und der Außenzylinder der Rotortasse mittels einer Pressverbindung unlösbar verbunden werden.

Offenend-Rotorspinnmaschinen weisen eine Vielzahl nebeneinander angeordneter Arbeitsstellen auf, die jeweils eine Offenend-Spinnvorrichtung aufweisen. Die Offenend-Spinnvorrichtung umfasst ein unterdruckbeaufschlagtes Rotorgehäuse, in dem die Rotortasse eines Spinnrotors mit hoher Drehzahl umläuft. Die Rotordrehzahl liegt in der Größenordnung von 100.000 min⁻¹.

Die DE 198 35 932 A1 offenbart eine Offenend-Spinnvorrichtung. Der Spinnrotor ist mit seinem Rotorschaft in den Lagerzwickeln einer Stützscheibenlagerung abgestützt und wird durch einen maschinenlangen Tangentialriemen beaufschlagt. Bei solchen Spinnrotoren sind der Rotorschaft und die Rotortasse über einen Presssitz unlösbar verbunden.

Die EP 1 156 142 B1 offenbart einen Spinnrotor, der mittels eines elektromotorischen Einzelantriebes angetrieben wird. Der Rotorschaft ist in einer magnetischen Lagerung gelagert. Um einen einfachen Austausch des Spinnrotors zu ermöglichen, ist die Rotortasse lösbar mit dem Rotorschaft verbunden. Zur Verbindung mit dem Rotorschaft weist die Rotortasse einen Bolzen mit einem kreiszylindrischen Führungsansatz und einem Außenmehrkant auf, der mittels einer Pressverbindung unlösbar mit der Rotortasse verbunden ist. Der Rotorschaft weist entsprechend eine zylindrische Bohrung und einen Innenmehrkant auf.

Sowohl der Rotorschaft der DE 198 35 932 A1 als auch der Bolzen der EP 1 156 142 B1 stellen einen wellenartigen Halter zum Rotieren der Rotortasse dar. Der wellenartige Halter zum Rotieren der Rotortasse ist ein im Verhältnis zum Durchmesser langes, zylinderförmiges Maschinenelement, das zum Weiterleiten von Drehbewegungen und Drehmomenten sowie zum Tragen und Lagern der mit ihm fest verbundenen rotierenden Rotortasse Verwendung findet.

In den meisten praktischen Anwendungen sind die Rotortasse und der wellenartige Halter aus Stahl. Die Rotortasse weist eine Bohrung oder eine zylindrische Vertiefung auf. Die Bohrung oder die zylindrische Vertiefung werden mit dem zylindrischen Ende des Halters mittels einer Pressverbindung verbunden.

Der Spinnrotor beziehungsweise die Rotortasse ist ein Verschleißteil. Die Rotortasse ist ständig in Kontakt mit bewegten Fasern. Dadurch wird die Rotortasse stark abgenutzt. Es ist deshalb schon vorgeschlagen worden die Rotortasse aus einer Keramik zu fertigen. Die JPH 10331035 A offenbart einen Spinnrotor mit einer Rotortasse aus Keramik und einem wellenartigen Halter aus Metall. Der Halter weist eine zylindrische Vertiefung auf, die einen Innenzylinder bildet, und die Rotortasse weist einen zylindrischen Ansatz aufweist, der einen Außenzylinder bildet. Der Innenzylinder des Halters und der Außenzylinder der Rotortasse sind mittels einer Pressverbindung unlösbar verbunden. Der Innenzylinder des Halters umschließt dann den Außenzylinder der Rotortasse. Dieses Konstruktionsprinzip, das heißt Metall außen und Keramik innen, kommt den Festigkeitseigenschaften der Keramik entgegen, da Keramik Druckkräfte besonders gut aufnehmen kann.

Keramik hat zwar den Vorteil, dass es sehr verschleißfest ist, dadurch ist es aber auch deutlich aufwändiger in der Bearbeitung als beispielsweise Stahl. Für das Herstellen der Pressverbindung zwischen der Rotortasse und dem Halter müssen der Innenzylinder des Halters und der Außenzylinder der Rotortasse mit sehr geringen Toleranzen gefertigt werden. Der Außenzylinder aus Keramik wird dazu durch Schleifen bearbeitet.

Es ist die Aufgabe der vorliegenden Erfindung das Herstellen der Pressverbindung zwischen einer Rotortasse aus Keramik und einem Halter aus Metall zu vereinfachen.

Zur Lösung der Aufgabe wird ein Spinnrotor umfassend eine Rotortasse aus Keramik und einen wellenartigen Halter aus Metall, insbesondere Stahl, zum Rotieren der Rotortasse vorgeschlagen. Der Halter weist eine zylindrische Vertiefung auf, die einen Innenzylinder bildet. Die Rotortasse weist einen zylindrischen Ansatz auf, der einen Außenzylinder bildet. Der Innenzylinder des Halters und der Außenzylinder der Rotortasse sind mittels einer Pressverbindung unlösbar verbunden. Erfindungsgemäß weist die Mantelfläche des Innenzylinders eine gewölbte Kontur auf.

Durch die gewölbte Mantelfläche des Innenzylinders werden die Genauigkeitsanforderungen an den Durchmesser eines korrespondierenden Außenzylinders der Rotortasse aus Keramik deutlich gesenkt. Das heißt, der Halter des erfindungsgemäßen Spinnrotors ermöglicht auf der einen Seite die sichere Herstellung einer Pressverbindung mit der Rotortasse aus Keramik. Auf der anderen Seite kann der Durchmesser des Außenzylinders der Rotortasse mit deutlich größeren Toleranzen und damit einfacher gefertigt werden, als das für eine Verbindung mit einem herkömmlichen Halter erforderlich ist.

Der Halter ist zwangsläufig rotationssymmetrisch, ansonsten könnte er keine Rotortasse einer Offenend-Spinnvorrichtung rotieren. Entsprechend sind auch die zylindrische Vertiefung und der durch Vertiefung gebildete Innenzylinder rotationssymmetrisch. Die Symmetrieachse entspricht der Rotationsachse.

Die Mantelfläche des Innenzylinders ist vorzugsweise in Richtung der Rotationsachse des Halters gewölbt. Vorzugsweise verläuft die gewölbte Kontur axial, das heißt in Richtung der Rotationsachse.

Die gewölbte Kontur ist vorzugsweise so ausgebildet, dass der Durchmesser des Innenzylinders in axialer Richtung beziehungsweise in Richtung der Rotationsachse zunächst zunimmt und dann wieder abnimmt. Zur einfachen Definition der Kontur kann diese auf einer Kreislinie liegen.

Zur Herstellung der Pressverbindung ist es günstig, wenn die axiale Länge des Innenzylinders kleiner ist als der halbe Durchmesser des Innenzylinders.

Vorzugsweise ist der Innenzylinder beziehungsweise die zylindrische Vertiefung in einen becherartigen Teil des Halters angeordnet. So kann eine trägheitsarme Ausbildung des Halters erreicht werden.

Der Halter kann je nach Antrieb des Spinnrotors als Rotorschaft oder als Bolzen zur Verbindung mit einem Rotorschaft ausgebildet sein.

Die Erfindung betrifft weiter ein Verfahren zur Herstellung einer Pressverbindung zwischen der Rotortasse aus Keramik und dem wellenartigen Halter aus Metall, wobei der Innenzylinder des Halters und der Außenzylinder der Rotortasse mittels einer Pressverbindung unlösbar verbunden werden. Erfindungsgemäß ist die Mantelfläche des Innenzylinders gewölbt. Dadurch kann die Pressverbindung auch bei großen Toleranzen des Durchmessers des Außenzylinders sicher hergestellt werden.

Vorzugsweise wird der Halter erhitzt und der Innenzylinder des Halters wird auf den Außenzylinder der Rotortasse aufgeschrumpft.

Die Erfindung wird nachfolgend an dem in den Figuren dargestellten Ausführungsbeispiel näher erläutert.

Es zeigen:
- Fig. 1: einen Halter eines erfindungsgemäßen Spinnrotors;
- Fig. 2: ein Detail des aus Fig. 1;
- Fig. 3: eine Rotortasse aus Keramik;
- Fig. 4: einen erfindungsgemäßen Spinnrotor.

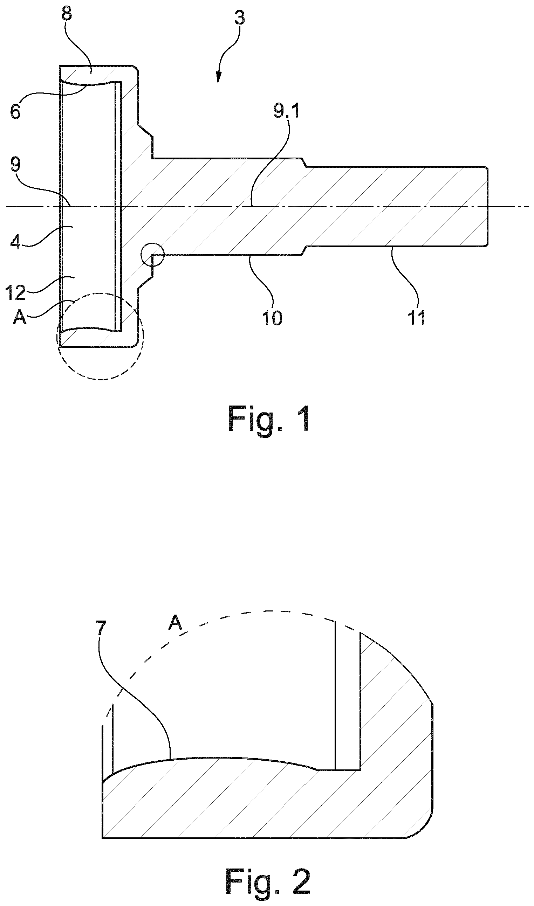

Die Fig. 1 zeigt einen wellenartigen Halter 3 eines erfindungsgemäßen Spinnrotors zum Rotieren einer Rotortasse 2. In dem Ausführungsbeispiel ist der Halter 3 als Bolzen ausgebildet um die Rotortasse 2 mit einem einzeln angetriebenen, nicht dargestellten Rotorschaft lösbar zu verbinden. Der Halter 3 umfasst einen becherartigen Teil 8, einen zylindrischen Führungsansatz 10 und einen Außenmehrkant 11. Die vorliegende Erfindung betrifft das Verbinden von Halter 3 und Rotortasse 2. Insofern wird auf weitere Details zur Verbindung des im Ausführungsbeispiel als Bolzen ausgebildeten Halters 3 mit dem nicht darstellten Rotorschaft verzichtet. Weitere Angaben hierzu können zum Beispiel der EP 1 156 142 B1 entnommen werden.

Der becherartige Teil 8 weist eine zylindrische Vertiefung 12 auf. Die Vertiefung bildet einen Innenzylinder 4. Der Innenzylinder 4 weist eine umlaufende Mantelfläche 6 auf und die Mantelfläche 6 weist eine gewölbte Kontur 7 auf. Die gewölbte Kontur 7 ist in der Fig. 2 vergrößert dargestellt.

Die Fig. 2 zeigt das Detail A aus Fig. 1.

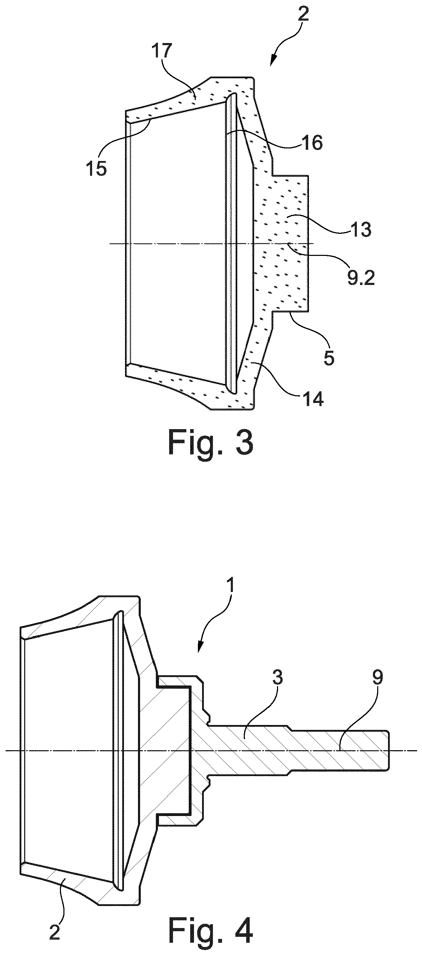

Die Fig. 3 zeigt eine Rotortasse 2 aus Keramik. Die rotationssymmetrische Rotortasse 2 ist nach vorne hin offen. In Umfangsrichtung wird die Rotortasse 2 durch die Seitenwand 17 begrenzt. Auf der der Öffnung gegenüberliegenden Seite befindet sich der Rotorboden 14. Im Inneren der Rotortasse 2 bildet die Seitenwand 17 die Faserrutschwand, die in der Rotorrille 16 endet.

An der Rückseite beziehungsweise Außenseite des Rotorbodens 14 weist die Rotortasse 2 einen zylindrischen Ansatz 13 auf. Der Außenumfang des Ansatzes 13 bildet einen Außenzylinder 5. Der zylindrische Ansatz 13 der Rotortasse 2 mit seinem Außenzylinder 5 korrespondiert mit der Vertiefung 12 und dem Innenzylinder 4 des Halters 3. Der Ansatz 13 und die Vertiefung 12 sind zum Herstellen einer Pressverbindung ausgebildet.

Die Fig. 4 zeigt einen erfindungsgemäßen Spinnrotor 1. Dieser umfasst die Rotortasse 2 und den Halter 3. Der Innenzylinder 4 des Halters 3 und der Außenzylinder 5 der Rotortasse 2 sind mittels einer Pressverbindung miteinander verbunden.

Die Spinnrotor 2 ist rotationssymmetrisch um die Rotationsachse 9. Das heißt, auch der Halter 3 und die Rotortasse 2 sind ebenfalls rotationssymmetrisch. Der Halter 3 ist rotationssymmetrisch zu der Rotationsachse 9.1. Die Rotortasse 2 ist rotationssymmetrisch zu der Rotationsachse 9.2. Im montierten Zustand fallen die Rotationsachsen 9.1 und 9.2 zur Rotationsachse 9 zusammen.

Der Halter 3 kann alternativ zu dem in Figuren gezeigten Ausführungsbeispiel auch als Rotorschaft ausgebildet sein.

### Bezugszeichenliste

- 1: Spinnrotor
- 2: Rotortasse
- 3: Halter
- 4: Innenzylinder
- 5: Außenzylinder
- 6: Mantelfläche
- 7: Kontur
- 8: becherartiger Teil
- 9.1: Rotationsachse
- 9.2: Rotationsachse
- 10: zylindrischer Führungsansatz
- 11: Außenmehrkant
- 12: zylindrische Vertiefung
- 13: zylindrische Ansatz
- 14: Rotorboden
- 15: Faserrutschwand
- 16: Rotorrille
- 17: Seitenwand

## Patentansprüche

1. Spinnrotor (1) umfassend eine Rotortasse (2) aus Keramik und einen wellenartigen Halter (3) aus Metall, insbesondere Stahl, zum Rotieren der Rotortasse (2), wobei der Halter (3) eine zylindrische Vertiefung (12) aufweist, die einen Innenzylinder (4) bildet, und die Rotortasse (2) einen zylindrischen Ansatz (13) aufweist, der einen Außenzylinder (5) bildet und wobei der Innenzylinder (4) des Halters (3) und der Außenzylinder (5) der Rotortasse (2) mittels einer Pressverbindung unlösbar verbunden sind, **dadurch gekennzeichnet, dass** die Mantelfläche (6) des Innenzylinders (4) eine gewölbte Kontur (7) aufweist.

2. Spinnrotor (1) nach Anspruch 1, **dadurch gekennzeichnet, dass** die Mantelfläche (6) des Innenzylinders (4) in Richtung der Rotationsachse (9) des Halters (3) gewölbt ist.

3. Spinnrotor (1) nach einem der vorherigen Ansprüche, **dadurch gekennzeichnet, dass** die gewölbte Kontur (7) axial verläuft.

4. Spinnrotor (1) nach einem der vorherigen Ansprüche, **dadurch gekennzeichnet, dass** die gewölbte Kontur (7) so ausgebildet ist, dass der Durchmesser des Innenzylinders (4) in axialer Richtung zunächst zunimmt und dann wieder abnimmt.

5. Spinnrotor (1) nach einem der vorherigen Ansprüche, **dadurch gekennzeichnet, dass** die Kontur (7) auf einer Kreislinie liegt.

6. Spinnrotor (1) nach einem der vorherigen Ansprüche, **dadurch gekennzeichnet, dass** der Innenzylinder (4) in einen becherartigen Teil (8) des Halters (3) angeordnet ist.

7. Spinnrotor (1) nach einem der vorherigen Ansprüche, **dadurch gekennzeichnet, dass** der Halter (3) als Rotorschaft oder als Bolzen zur Verbindung mit einem Rotorschaft ausgebildet ist.

8. Verfahren zur Herstellung einer Pressverbindung zwischen einer Rotortasse (2) aus Keramik und einem wellenartigen Halter (3) aus Metall eines Spinnrotors (1) gemäß einem der Ansprüche 1 bis 7, wobei der Halter (3) eine zylindrische Vertiefung (12) aufweist, die einen Innenzylinder (4) bildet, und die Rotortasse (2) einen zylindrischen Ansatz (13) aufweist, der einen Außenzylinder (5) bildet, wobei der Innenzylinder (4) des Halters (3) und der Außenzylinder (5) der Rotortasse (2) mittels einer Pressverbindung unlösbar verbunden werden, **dadurch gekennzeichnet, dass** die Mantelfläche (6) des Innenzylinders (4) gewölbt ist.

9. Verfahren nach Anspruch 8, **dadurch gekennzeichnet, dass** der Halter (3) erhitzt wird und dass der Innenzylinder (4) des Halters (3) auf den Außenzylinder (5) der Rotortasse (2) aufgeschrumpft wird.

## Claims

1. Spinning rotor (1) comprising a rotor cup (2) consisting of ceramic and a shaft-like holder (3) consisting of metal, in particular steel, for rotating the rotor cup (2), the holder (3) having a cylindrical depression (12) which forms an inner cylinder (4), and the rotor cup (2) having a cylindrical attachment (13) which forms an outer cylinder (5), and the inner cylinder (4) of the holder (3) and the outer cylinder (5) of the rotor cup (2) being non-detachably connected by means of a press connection, **characterized in that** the lateral surface (6) of the inner cylinder (4) has a curved contour (7).

2. Spinning rotor (1) according to claim 1, **characterized in that** the lateral surface (6) of the inner cylinder (4) is curved in the direction of the axis of rotation (9) of the holder (3).

3. Spinning rotor (1) according to either of the preceding claims, **characterized in that** the curved contour (7) extends axially.

4. Spinning rotor (1) according to any of the preceding claims, **characterized in that** the curved contour (7) is designed such that the diameter of the inner cylinder (4) initially increases in the axial direction and then decreases again.

5. Spinning rotor (1) according to any of the preceding claims, **characterized in that** the contour (7) lies on a circular line.

6. Spinning rotor (1) according to any of the preceding claims, **characterized in that** the inner cylinder (4) is arranged in a cup-like part (8) of the holder (3).

7. Spinning rotor (1) according to any of the preceding claims, **characterized in that** the holder (3) is designed as a rotor shaft or as a bolt for connection to a rotor shaft.

8. Method for producing a press connection between a rotor cup (2) consisting of ceramic and a wave-like holder (3) consisting of metal of a spinning rotor (1) according to any of claims 1 to 7, the holder (3) having a cylindrical depression (12) which forms an inner cylinder (4), and the rotor cup (2) having a cylindrical shoulder (13) which forms an outer cylinder (5), the inner cylinder (4) of the holder (3) and the outer cylinder (5) of the rotor cup (2) being non-detachably connected by means of a press connection, **characterized in that** the lateral surface (6) of the inner cylinder (4) is curved.

9. Method according to claim 8, **characterized in that** the holder (3) is heated and **in that** the inner cylinder (4) of the holder (3) is shrink-fitted onto the outer cylinder (5) of the rotor cup (2).

## Revendications

1. Rotor de filage (1) comprenant une cuvette de rotor (2) en céramique et un support (3) ondulé en métal, en particulier l'acier, pour faire tourner la cuvette de rotor (2), le support (3) présentant une cavité (12) cylindrique qui forme un cylindre intérieur (4), et la cuvette de rotor (2) présentant une embase (13) cylindrique qui forme un cylindre extérieur (5) et le cylindre intérieur (4) du support (3) et le cylindre extérieur (5) de la cuvette de rotor (2) étant reliés de manière indissociable au moyen d'une liaison par pression, **caractérisé en ce que** la surface d'enveloppe (6) du cylindre intérieur (4) présente un contour (7) incurvé.

2. Rotor de filage (1) selon la revendication 1, **caractérisé en ce que** la surface d'enveloppe (6) du cylindre intérieur (4) est incurvée dans la direction de l'axe de rotation (9) du support (3).

3. Rotor de filage (1) selon l'une des revendications précédentes, **caractérisé en ce que** le contour (7) incurvé s'étend axialement.

4. Rotor de filage (1) selon l'une des revendications précédentes, **caractérisé en ce que** le contour (7) incurvé est conçu de sorte que le diamètre du cylindre intérieur (4) augmente d'abord puis diminue de nouveau dans la direction axiale.

5. Rotor de filage (1) selon l'une des revendications précédentes, **caractérisé en ce que** le contour (7) se trouve sur une ligne circulaire.

6. Rotor de filage (1) selon l'une des revendications précédentes, **caractérisé en ce que** le cylindre intérieur (4) est agencé dans une partie (8) en forme de coupe du support (3).

7. Rotor de filage (1) selon l'une des revendications précédentes, **caractérisé en ce que** le support (3) est conçu comme un arbre de rotor ou comme un boulon destiné à être relié à l'arbre de rotor.

8. Procédé permettant d'établir une liaison par pression entre une cuvette de rotor (2) en céramique et un support (3) ondulé en métal d'un rotor de filage (1) conformément à l'une des revendications 1 à 7, le support (3) présentant une cavité (12) cylindrique qui forme un cylindre intérieur (4), et la cuvette de rotor (2) présentant une embase (13) cylindrique qui forme un cylindre extérieur (5), le cylindre intérieur (4) du support (3) et le cylindre extérieur (5) de la cuvette de rotor (2) étant reliés de manière indissociable au moyen d'une liaison par pression, **caractérisé en ce que** la surface d'enveloppe (6) du cylindre intérieur (4) est incurvée.

9. Procédé selon la revendication 8, **caractérisé en ce que** le support (3) est chauffé, et **en ce que** le cylindre intérieur (4) du support (3) est posé par frettage sur le cylindre extérieur (5) de la cuvette de rotor (2).
